# EUROPEAN PATENT APPLICATION

(11) **EP 4 145 259 A1**
(43) Date of publication of application: **08.03.2023**
(21) Application number: 21797246.2
(22) Date of filing: 26.04.2021
(51) Int. Cl.: G06F 3/0484

(54) **DISPLAY CONTROL METHOD AND APPARATUS, AND ELECTRONIC DEVICE**

(30) Priority: 30.04.2020 CN 202010366979
(71) Applicant: Vivo Mobile Communication Co., Ltd., Dongguan, Guangdong 523863 (CN)
(72) Inventor: DENG, Liangming, Dongguan, Guangdong 523863 (CN)
(74) Representative: Chas. Hude A/S
(86) International application number: PCT/CN2021/089854
(87) International publication number: WO 2021/218902

(57) **Abstract**

Embodiments of this application provide a display control method and apparatus, and an electronic device. The solution includes: receiving a first input performed by a user on a target control, where the target control includes N application identifiers; and displaying target information in a target area of a target screen of an electronic device in response to the first input, where the target information is pre-stored information about a target interface of a target application program, the target application program is an application program indicated by a target application identifier in the N application identifiers, and N is a positive integer.

## Description

### CROSS-REFERENCE TO RELATED APPLICATIONS

This application claims priority to Chinese Patent Application No.202010366979.X, filed on April 30, 2020 in China, which is incorporated herein by reference in its entirety.

### TECHNICAL FIELD

Embodiments of this application relate to the field of communications technologies, and in particular, to a display control method and apparatus, and an electronic device.

### BACKGROUND

Currently, when a user browses an interface of an application program and needs to compare related information of a piece of content on the interface in different application programs of an electronic device, for example, the user browses an interface of a communication application program and needs to compare related information of an intelligent device on an interface of the communication application program in a shopping application program 1 and a shopping application program 2 (for example, configuration information and price information of the intelligent device), the user needs to first trigger the electronic device to exit the communication application program, and then the user may trigger the electronic device to run the shopping application program 1, and view related information of the intelligent device an interface of the shopping application program 1. Then, the user may trigger the electronic device to run the shopping application program 2, and view related information of the intelligent device on an interface of the shopping application program 2, so that the user can compare the related information of the intelligent device in the shopping application program 1 and the shopping application program 2.

However, in the foregoing process, related information of a piece of content in different application programs can be viewed only when the user triggers the electronic device to exit an application program currently running on the electronic device, that is the user can view only the content in one application program at a same moment. Therefore, a process in which the user views content in a plurality of application programs may be relatively cumbersome and time-consuming.

### SUMMARY

Embodiments of this application provide a display control method and apparatus, and an electronic device, to resolve a problem that a process in which a user views content in a plurality of application programs is relatively cumbersome and time-consuming.

To resolve the foregoing technical problem, this application is implemented as follows:

According to a first aspect, an embodiment of this application provides a display control method. The method includes: receiving a first input performed by a user on a target control, and displaying target information in a target area of a target screen of an electronic device in response to the first input. The target control includes N application identifiers; and the target information is pre-stored information about a target interface of a target application program, the target application program is an application program indicated by a target application identifier in the N application identifiers, and N is a positive integer.

According to a second aspect, an embodiment of this application provides a display control apparatus. The display control apparatus includes a receiving module and a processing module. The receiving module is configured to receive a first input performed by a user on a target control, where the target control includes N application identifiers; and the processing module is configured to display target information in a target area of a target screen of an electronic device in response to the first input received by the receiving module, where the target information is pre-stored information about a target interface of a target application program, the target application program is an application program indicated by a target application identifier in the N application identifiers, and N is a positive integer.

According to a third aspect, an embodiment of this application provides an electronic device. The electronic device includes a processor, a memory, and a computer program that is stored in the memory and that can be run on the processor, where when the computer program is executed by the processor, the steps of the display control method in the first aspect are implemented.

According to a fourth aspect, an embodiment of the present invention provides a computer-readable storage medium. The computer-readable storage medium stores a computer program, and when the computer program is executed by a processor, the steps of the display control method in the first aspect are implemented.

In the embodiments of this application, after an electronic device receives a first input performed by a user on a target control (including N application identifiers), the electronic device may display target information in a target area of a target screen of the electronic device in response to the first input. The target information is pre-stored information about a target interface of a target application program, the target application program is an application program indicated by a target application identifier in the N application identifiers, and N is a positive integer. In this solution, the electronic device may prestore the information about the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the electronic device can be triggered to display the related information in these application programs stored in the target area of the target screen. In this way, the user can continue to browse other content on the interface of the one application program, and can directly compare information about the content in these application programs, that is, the user does not need to trigger the electronic device to exit the one application program to view the information about the content in these application programs, thereby simplifying an operation through which the user views the content in these application programs and improving efficiency of viewing the content in these application programs.

### BRIEF DESCRIPTION OF DRAWINGS

FIG. 1 is a schematic architectural diagram of an operating system according to an embodiment of this application;
FIG. 2 is a first schematic diagram of an application interface of a display control method according to an embodiment of this application;
FIG. 3 is a second schematic diagram of an application interface of a display control method according to an embodiment of this application;
FIG. 4 is a first schematic diagram of a display control method according to an embodiment of this application;
FIG. 5 is a third schematic diagram of an application interface of a display control method according to an embodiment of this application;
FIG. 6 is a second schematic diagram of a display control method according to an embodiment of this application;
FIG. 7 is a third schematic diagram of a display control method according to an embodiment of this application;
FIG. 8 is a fourth schematic diagram of an application interface of a display control method according to an embodiment of this application;
FIG. 9 is a fifth schematic diagram of an application interface of a display control method according to an embodiment of this application;
FIG. 10 is a sixth schematic diagram of an application interface of a display control method according to an embodiment of this application;
FIG. 11 is a fourth schematic diagram of a display control method according to an embodiment of this application;
FIG. 12 is a fifth schematic diagram of a display control method according to an embodiment of this application;
FIG. 13 is a schematic structural diagram of a display control apparatus according to an embodiment of this application; and
FIG. 14 is a schematic diagram of hardware of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In this specification, a term "and/or" is an associative relationship for describing associated objects, indicating that three relationships may exist, for example, A and/or B may indicate three cases: A exists independently, both A and B exist, and B exists independently. In this specification, a symbol "/" indicates an "or" relationship between associated objects, for example, A/B indicates A or B.

In this specification, terms "first", "second", and so on are intended to distinguish between different objects but do not describe a particular order of the objects. For example, a first input and a second input are intended to distinguish between different inputs, instead of describing a particular order of the inputs.

In the embodiments of this application, the word such as "example" or "for example" is used to represent giving an example, an illustration, or a description. Any embodiment or design scheme described as " example" or "for example" in the embodiments of this application should not be explained as being more preferred or having more advantages than another embodiment or design scheme. Exactly, use of the word "example" or "for example" is intended to present a concept in a specific manner.

In the descriptions of the embodiments of this application, unless otherwise stated, "a plurality of" means two or more, for example, a plurality of elements mean two or more elements.

The embodiments of this application provide a display control method and apparatus, and an electronic device. The display control method may be applied to an electronic device. Specifically, after the electronic device receives a first input performed by a user on a target control (including N application identifiers), the electronic device may display target information in a target area of a target screen of the electronic device in response to the first input. The target information is pre-stored information about a target interface of a target application program, the target application program is an application program indicated by a target application identifier in the N application identifiers, and N is a positive integer. In this solution, the electronic device may prestore the information about the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the electronic device can be triggered to display the related information in these application programs stored in the target area of the target screen. In this way, the user can continue to browse other content on the interface of the one application program, and can directly compare information about the content in these application programs, that is, the user does not need to trigger the electronic device to exit the one application program to view the information about the content in these application programs, thereby simplifying an operation through which the user views the content in these application programs and improving efficiency of viewing the content in these application programs.

The electronic device in the embodiments of the present invention may be an electronic device with an operating system. The operating system may be an Android (Android) operating system, an iOS operating system, or another possible operating system. This is not specifically limited in the embodiments of this application.

The following uses the operating system as an example to describe a software environment to which the display control method provided in the embodiments of this application is applied.

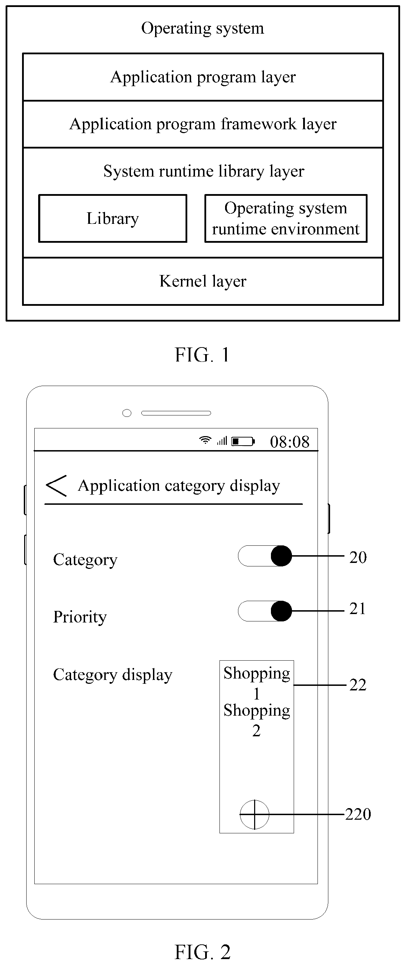

As shown in FIG. 1, FIG. 1 is a schematic architectural diagram of a possible operating system according to an embodiment of this application. In FIG. 1, an architecture of the operating system includes four layers: an application program layer, an application program framework layer, a system runtime library layer, and a kernel layer (which may be specifically a Linux kernel layer).

The application program layer includes all application programs in the operating system (including a system application program and a third-party application program).

The application program framework layer is an application program framework, and the developer may develop some application programs based on the application program framework layer when following a development rule of the application program framework.

The system runtime library layer includes a library (also referred to as a system library) and an operating system runtime environment. The library mainly provides the Android operating system with various resources required by the operating system. The operating system runtime environment is used to provide the operating system with a software environment.

The kernel layer is an operating system layer of the operating system, and is a bottom-most layer in operating system software layers. The kernel layer provides the operating system with a core system service and a hardware-related driver based on the Linux kernel.

The operating system is used as an example. In the embodiments of this application, the developer may develop, based on the system architecture of the operating system shown in FIG. 1, a software program to implement the display control method provided in the embodiments of this application, so that the display control method can run based on the operating system shown in FIG. 1. That is, a processor or an electronic device may run the software program in the operating system to implement the display control method provided in the embodiments of this application.

The electronic device in the embodiments of this application may be a mobile electronic device, or may be a non-mobile electronic device. For example, the mobile electronic device may be a mobile phone, a tablet computer, a laptop computer, a palmtop computer, an in-vehicle terminal, a wearable device, an ultra-mobile personal computer (ultra-mobile personal computer, UMPC), a netbook, or a personal digital assistant (personal digital assistant, PDA); and the non-mobile electronic device may be a personal computer (personal computer, PC), a television (television, TV), an automated teller machine or a self-service machine. This is not specifically limited in the embodiments of this application.

The display control method provided in the embodiments of this application may be performed by the foregoing electronic device, or a functional module and/or a functional entity that can implement the display control method in the electronic device, or the display control apparatus in the embodiments of this application. Specifically, this may be determined based on an actual use requirement, and is not limited in the embodiments of this application. Taking the electronic device as an example, the following describes the display control method provided in the embodiments of this application.

The display control method provided in the embodiments of this application may be applied to a scenario in which when browsing an interface of an application program (for example, a browser application program), a user compares related information of a piece of content on the interface in different application programs of an electronic device. For example, the display control method provided in the embodiments of this application may be applied to a scenario in which description information of a commodity (for example, an intelligent device) in a shopping application program 1 and a shopping application program 2 of the electronic device is compared, or may be applied to a scenario in which beautification effects of a photo in a Meitu application program 1 and a Meitu application program 2 of the electronic device are compared, or may be applied to a scenario in which related interpretations of a term in a browser application program 1 and a browser application program 2 of the electronic device are compared.

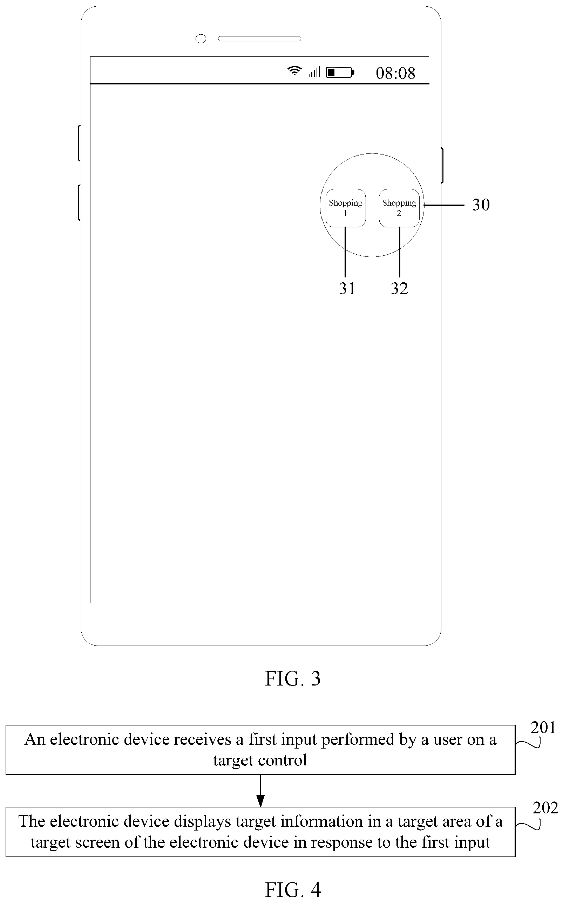

For example, description information of a commodity in the shopping application program 1 and the shopping application program 2 of the electronic device is compared. When the user needs to compare the description information of the commodity in the shopping application program 1 and the shopping application program 2 of the electronic device, in a first step, the user may trigger the electronic device to enable a preset mode. Specifically, in the embodiments of this application, a preset control may be set in a setting application program, and the user may operate the preset control to trigger the electronic device to enable or disable the preset mode. After the user operates the preset control to trigger the electronic device to enable the preset mode, a target control 30 in FIG. 3 may be displayed (specifically, displayed in a hover box) on a screen of the electronic device. After the user operates the preset control to trigger the electronic device to disable the preset mode, the target control is not displayed on the screen of the electronic device.

In a second step, the user may trigger the electronic device to store an identity document (Identity document, ID) of the shopping application program 1 and an ID of the shopping application program 2. Specifically, the user may trigger, by adding an application identifier of the shopping application program 1 and an application identifier of the shopping application program 2 to the setting application program, the electronic device to store the ID of the shopping application program 1 and the ID of the shopping application program 2.

In the embodiments of this application, a classifying display option may be set in the setting application program, and the classifying display option may be used by the user to add an application identifier. After the user adds an application identifier, the electronic device may store an ID of an application program indicated by the application identifier.

It should be noted that, in the embodiments of this application, a preset entry may be set in the setting application program. After the user taps the preset entry, the electronic device may display a classifying control and the classifying display option, so that the foregoing operation can be conveniently performed. In addition, an execution sequence of the first step and the second step is not limited in the embodiments of this application. That is, the user may first trigger the electronic device to enable the preset mode, and then trigger the electronic device to store the ID of the shopping application program 1 and the ID of the shopping application program 2, or the user may first trigger the electronic device to store the ID of the shopping application program1 and the ID of the shopping application program 2, and then trigger the electronic device to enable the preset mode. The foregoing preset entry may be a control or an identifier. After the user taps the preset entry, the electronic device may jump from a currently displayed interface to an interface of the classifying control and the classifying display option.

In a third step, the user may trigger the electronic device to run the shopping application program 1. After the electronic device runs the shopping application program 1, that is, the electronic device displays an interface of the shopping application program 1, the target control may display the application identifier of the shopping application program 1. The user may operate the interface of the shopping application program1 to interact with the shopping application program 1 (for example, search for description information of the commodity), so that the electronic device displays the description information of the commodity on the interface of the shopping application program 1. Then the electronic device may automatically capture the description information of the commodity or the user triggers the electronic device to capture the description information of the commodity, so that the electronic device can store the information. Further, the user may trigger the electronic device to run the shopping application program 2. After the electronic device runs the shopping application program 2, that is, after the electronic device displays an interface of the shopping application program 2, the target control may display the application identifier of the shopping application program 2 (it can be understood that the target control includes the application identifier of the shopping application program 1 and the application identifier of the shopping application program 2). The user may operate the interface of the shopping application program 2 to interact with the shopping application program 2 (for example, search for description information of the commodity), so that the electronic device displays the description information of the commodity on the interface of the shopping application program 2. Then the electronic device may automatically capture the description information of the commodity or the user triggers the electronic device to capture the description information of the commodity, so that the electronic device can store the information. Finally, the user may perform an input on the target control currently displayed by the electronic device, that is, the user may trigger the electronic device to display the information in a target area of a target screen of the electronic device, so that the user can directly compare the description information of the commodity in the shopping application program 1 and the shopping application program 2.

In the embodiments of this application, in a scenario in which the electronic device is in a split-screen (for example, left-right split-screen) display state, when the user views information on a left screen of the electronic device, the target screen may be a right screen of the electronic device. In another scenario in which the electronic device is a dual-screen or multi-screen electronic device, when the user views information on a first screen of the electronic device, the user may control the electronic device to flip to a second screen of the electronic device, and the second screen may be the foregoing target screen.

The following exemplarily describes an implementation process of the foregoing three steps with reference to FIG. 2 and FIG. 3 by using an example in which description information of a commodity in the shopping application program 1 and the shopping application program 2 of the electronic device is compared.

For example, after the user taps the preset entry, the electronic device may display an interface shown in FIG. 2. The interface may include a classifying control 20 and a classifying display option 22 in FIG. 2, and the classifying display option 22 may include an adding control 220. First, the user may perform an input on the classifying control 20 to trigger the electronic device to enable the preset mode. After the electronic device enables the preset mode, the electronic device may display the target control on the screen. Then, the user may perform an input on the adding control 220 to trigger the electronic device to display an application identifier of an application program in the electronic device. The user may select the application identifier of the shopping application program 1 and the application identifier of the shopping application program 2 from these application identifiers, that is, trigger the electronic device to store the ID of the shopping application program 1 and the ID of the shopping application program 2. Finally, the user may trigger the electronic device to run the shopping application program 1 and perform the foregoing related operation to store information, and trigger the electronic device to run the shopping application program 2 and perform the foregoing related operation to store information. In this case, as shown in FIG. 3, the target control 30 displayed by the electronic device may include an application identifier 31 of the shopping application program 1 and an application identifier 32 of the shopping application program 2. The user may perform an input on the target control 30 displayed by the electronic device, that is, the user may trigger the electronic device to display the information in the target area of the target screen of the electronic device, so that the user can directly compare the description information of the commodity in the shopping application program 1 and the shopping application program 2.

It can be understood that, in the embodiments of this application, if the user triggers the electronic device to run the application program, the electronic device may be triggered to automatically add the application identifier of the application program to the target control, that is, the target control displayed by the electronic device may include the application identifier of the application program. Further, in a case that the target control displayed by the electronic device includes an application identifier of an application program, an input performed by the user on the target control may trigger the electronic device to display target information of a pieces of content stored by the electronic device in the application program.

Optionally, in the embodiments of this application, the foregoing target information may be image information of an interface of an application program or video information of an interface of an application program prestored by the electronic device. Specifically, this may be determined based on an actual use requirement, and is not limited in this embodiment of this application.

In the embodiments of this application, the electronic device may prestore the information on the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the electronic device can be triggered to display the related information in these application programs stored in the target area of the target screen. In this way, the user can continue to browse other content on the interface of the one application program, and can directly compare information about the content in these application programs, that is, the user does not need to trigger the electronic device to exit the one application program to view the information about the content in these application programs, thereby simplifying an operation through which the user views the content in these application programs and improving efficiency of viewing the content in these application programs.

The display control method provided in the embodiments of this application is illustrated in detail below with reference to the accompanying drawings.

As shown in FIG. 4, an embodiment of this application provides a display control method. The method may include the following steps 201 and step 202.

Step 201: An electronic device receives a first input performed by a user on a target control.

The target control may include N application identifiers, and N is a positive integer.

Optionally, in this embodiment of this application, the target control may be a control currently displayed by the electronic device.

Optionally, in this embodiment of this application, when the user controls the electronic device to enable a preset mode, the electronic device may display the target control.

Optionally, in this embodiment of this application, the N application identifiers may be added to the target control through triggering by the user.

Optionally, in this embodiment of this application, each of the N application identifiers may be an icon of an application program, a shortcut to an application program, or the like. Specifically, this may be determined based on an actual use requirement, and is not limited in this embodiment of this application.

Optionally, in this embodiment of this application, the first input may be a tap input performed by the user on the target control, a heavy touch input performed by the user on the target control, a touch-and-hold input performed by the user on the target control, or the like. Specifically, this may be determined based on an actual use requirement, and is not limited in this embodiment of this application.

It should be noted that in this embodiment of this application, the touch-and-hold input is an input that is performed by the user on a screen of the electronic device for duration greater than or equal to a time threshold, and the heavy touch input is an input that is performed by the user on the screen of the electronic device with a pressure value greater than or equal to a pressure threshold.

Step 202: The electronic device displays target information in a target area of a target screen of the electronic device in response to the first input.

The target information may be information that is about a target interface of a target application program and that is prestored by the electronic device, and the target application program may be an application program indicated by a target application identifier in the N application identifiers.

It should be noted that in this embodiment of this application, in a possible implementation, the electronic device may determine target application identifiers according to identifiers displayed in the target control. Specifically, the electronic device may use the identifiers displayed in the target control as the target application identifiers. For example, if the target control includes five identifiers, the five identifiers are target application identifiers. In another possible implementation, the electronic device may determine target application identifiers according to identifiers displayed in the target control and an application program displayed on a current interface of the electronic device. Specifically, the electronic device may use, as target application identifiers, identifiers other than an application identifier of the application program currently displayed by the electronic device in the identifiers displayed in the target control. For example, if the target control includes three identifiers: an application identifier of a shopping application program 1, an application identifier of a shopping application program 2, and an application identifier of a shopping application program 3, and the current interface of the electronic device displays the application identifier of the shopping application program 1, the target identifier may be the application identifier of the shopping application program 2 and the application identifier of the shopping application program 3.

In this embodiment of this application, after the electronic device receives the first input performed by the user on the target control, the electronic device may obtain, in response to the first input, the information that is about the target interface of the target application program and that is prestored by the electronic device, and display the information in the target area of the target screen of the electronic device.

Optionally, in this embodiment of this application, there may be one or more target application programs. Specifically, this may be determined based on an actual use requirement, and is not limited in this embodiment of this application. It can be understood that, in a case that there may be one target application program, the target application identifier may be one application identifier. In a case that there are a plurality of target application programs, there may be a plurality of target application identifiers.

Further, in a case that there may be one target application program, the target information may be one piece of information. In a case that there are a plurality of target application programs, the target information may be a plurality of pieces of information.

Optionally, in this embodiment of this application, the target screen may be a display screen that faces the user in the electronic device. It can be understood that the electronic device in this embodiment of this application may be a dual-screen or multi-screen electronic device. The display screen that faces the user in the electronic device may be considered as the target screen of the electronic device.

Optionally, in this embodiment of this application, the target area may be any area in the target screen, and a size, a shape, and a display location of the target area may be determined based on an actual use requirement, and are not limited in this embodiment of this application.

Optionally, in this embodiment of this application, in a case that the target control of the electronic device includes N application identifiers, the electronic device may further display, in the target area of the target screen of the electronic device in response to the first input, information that is about an application program indicated by each of the N application identifiers and that is prestored by the electronic device.

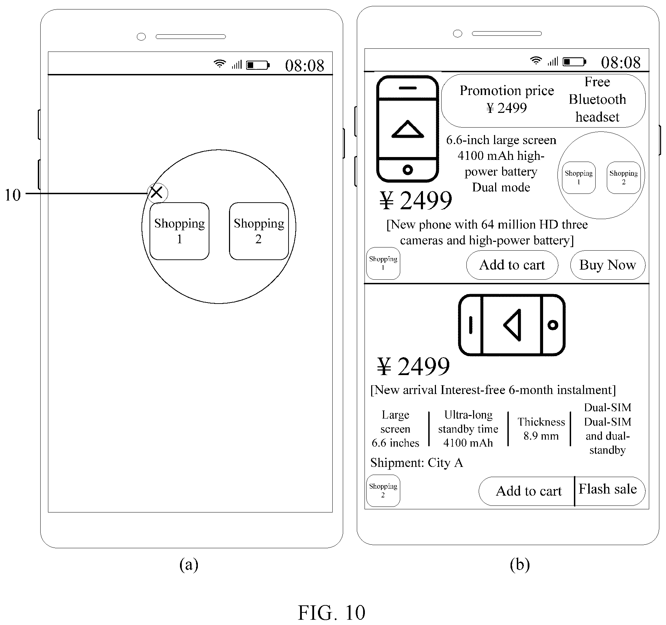

For example, it is assumed that the target control of the electronic device includes an application identifier of a shopping application program 1 and an application identifier of a shopping application program 2. After the electronic device receives the first input performed by the user, as shown in (b) in FIG. 10, the electronic device may display information about the shopping application program1 and information about the shopping application program 2 that are prestored by the electronic device.

Optionally, in this embodiment of this application, in a case that there is one target application program, step 202 may be specifically implemented by the following step 202a.

Step 202a: The electronic device displays the target information in a display area in a preset range of the target screen of the electronic device.

In this embodiment of this application, in a case that there is one target application program, the electronic device may display the target information in the display area in the preset range of the target screen of the electronic device.

Optionally, in this embodiment of this application, the preset range may be all display areas of the target screen, or may be a part (for example, 80%) of display areas of the target screen. Specifically, this may be determined based on an actual use requirement, and is not limited in this embodiment of this application.

Optionally, in this embodiment of this application, in a case that there are M target application programs, step 202 may be specifically implemented by the following step 202b.

Step 202b: The electronic device displays target information of the M application programs in M sub-display areas of the target screen according to display priorities of the M application programs.

Target information of one application program may be correspondingly displayed in one sub-display area, M is an integer greater than 1, and M≤N.

Optionally, in this embodiment of this application, the electronic device may determine, according to a value of M and a screen display size of the electronic device, a display size of target information of one application program in content of the M application programs, that is, a size of a sub-display area.

In this embodiment of this application, in a case that there are M target application programs, the electronic device may display the target information of the M application programs in the M sub-display areas of the target screen according to the display priorities (or a display priority order) of the M application programs. Specifically, the electronic device may use an arrangement order of application identifiers in a classifying display option as display priorities of application programs indicated by these application identifiers.

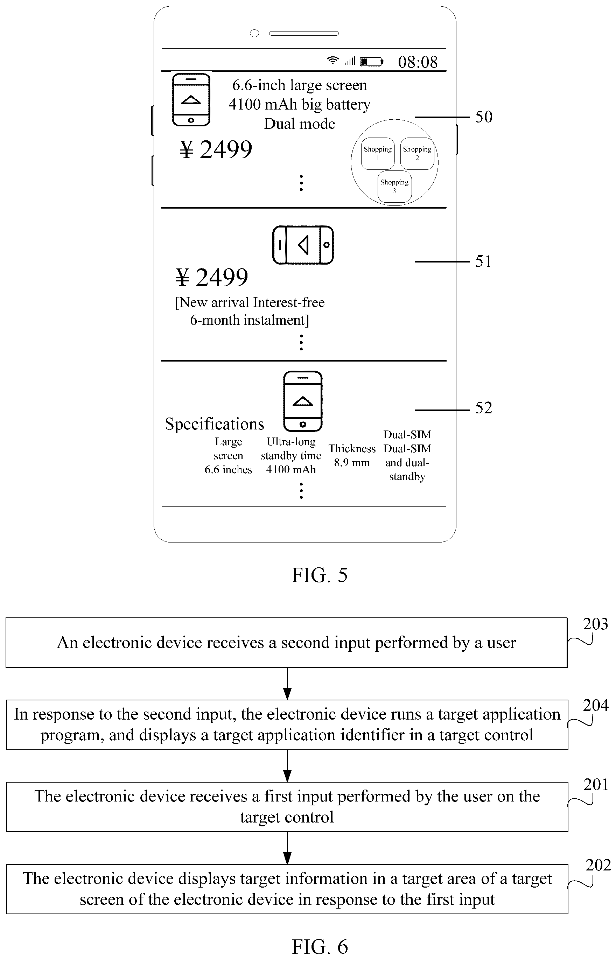

For example, assuming that N is equal to 3, three application programs are respectively a shopping application program 1, a shopping application program 2, and a shopping application program 3, and application identifiers in the classifying display option displayed by the electronic device are successively an application identifier of the shopping application program 1, an application identifier of the shopping application program 2, and an application identifier of the shopping application program 3. After the electronic device receives the first input performed by the user, as shown in FIG. 5, the electronic device may sequentially display information 50 about the shopping application program 1, information 51 about the shopping application program 2, and information 52 about the shopping application program 3 in FIG. 5 on a screen. For example, the electronic device may sequentially display the information 50 about the shopping application program 1, the information 51 about the shopping application program 2, and the information 52 about the shopping application program 3 from a top area of the screen.

Optionally, in this embodiment of this application, in a case that the user triggers the electronic device to enable a priority mode, the electronic device may display the target information of the M application programs in the M sub-display areas of the target screen according to the display priorities of the M application programs. In this embodiment of this application, a priority control (as shown in 21 in FIG. 2) may be set in an application program, and an operation performed by the user on the priority control may trigger the electronic device to enable or disable display of the priority mode. Specifically, after the user triggers the electronic device to enable the priority mode, the electronic device may display the target information of the M application programs through split-screen display according to the display priorities of the M application programs. After the user triggers the electronic device to disable display of the priority mode, the electronic device may display the target information of the M application programs through split-screen display according to another display rule. For example, the electronic device may randomly display the target information of the M application programs on the target screen; or the electronic device may display the target information of the M application programs on the target screen according to a time interval between a running time of the M application programs that is last run in the foreground and a current system time of the electronic device.

It can be understood that, in this embodiment of this application, after the user taps a preset entry, the electronic device may display a classifying control, the classifying display option, and the priority control.

The display control method provided in this embodiment of this application may be applied to a scenario in which information is displayed on the screen that faces the user after flipping, or may be applied to a scenario in which the electronic device displays information through split-screen display. Because the electronic device may display the target information of the M application programs in the M sub-display areas of the target screen according to the display priorities of the M application programs, it may be convenient for the user to view content of the M application programs at once, and therefore it may be convenient for the user to compare the target information of the M application programs, thereby improving comparison efficiency and improving human-computer interaction performance.

The display control method provided in this embodiment of this application may be applied to a scenario in which information is displayed on the screen that faces the user after flipping, or may be applied to a scenario in which the electronic device displays information through split-screen display. The electronic device may prestore the information about the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the electronic device can be triggered to display the related information in these application programs stored in the target area of the target screen. In this way, the user can continue to browse other content on the interface of the one application program, and can directly compare information about the content in these application programs, that is, the user does not need to exit the one application program to view the information about the content in these application programs, thereby ensuring that the user can browse an interface of one application program and compare related information about specific content in different applications on the interface at the same time.

For example, when the electronic device is in a split-screen display state, when the user views information on a left screen of the electronic device, the electronic device may display stored information in a target area of a right screen of the electronic device. Therefore, the user can view the information without a need to switch back and forth the screen, that is, the user can view the information on one screen of the electronic device, thereby simplifying an operation of viewing the information by the user, and improving efficiency of viewing the information by the user.

Further, because the user can directly compare the information about the content in the different application programs without triggering the electronic device to switch between the different application programs for a plurality of times, the process of comparing the related information about the content in the different application programs can be simplified, thereby improving efficiency of comparing the related information.

Optionally, in this embodiment of this application, all target application identifiers in the target control are added by the electronic device to the target control when the user triggers the electronic device to run the target application program indicated by the target application identifier. Specifically, after the user triggers the electronic device to run one application program in the target application programs, the electronic device may add an application identifier of the one application program to the target control. After the user triggers the electronic device to run another application program in the target application programs, the electronic device may add an application identifier of the another application program to the target control. By analogy, after the user triggers the electronic device to run the target application program, the electronic device may add an application identifier of the target application program to the target control, so that the electronic device can display the target application identifier in the target control.

It should be noted that, in this embodiment of this application, another application identifier other than the target application identifier in the N application identifiers of the target control may also be added by the user to the target control according to the foregoing method. The only difference lies in that the another application identifier may be added to the target control by the electronic device triggered by the user before the device is powered on or off or in another scenario.

It can be understood that, in this embodiment of this application, a process in which the user triggers the electronic device to run the target application program (or the electronic device adds the target application identifier) may be performed before the foregoing step 201.

For example, with reference to FIG. 4, as shown in FIG. 6, before the foregoing step 201, the display control method provided in this embodiment of this application may further include the following step 203 and step 204.

Step 203: The electronic device receives a second input performed by the user.

The second input may be used by the user to trigger the electronic device to run an application program (for example, the following target application program).

Step 204: In response to the second input, the electronic device runs the target application program, and displays the target application identifier in the target control.

In this embodiment of this application, after the electronic device receives the second input performed by the user, in response to the second input, the electronic device may run the target application program, and display the target application identifier in the target control.

It should be noted that in this embodiment of this application, the foregoing step 203 and step 204 are described by using an example in which the electronic device adds an application identifier to the target control, that is, the target control displayed by the electronic device includes an application identifier. In actual implementation, the user may repeatedly trigger the electronic device to perform the foregoing step 203 and step 204, so that the electronic device displays the target application identifier in the target control, that is, the target control displayed by the electronic device includes the target application identifier.

The display control method provided in this embodiment of this application may be applied to a scenario in which information is displayed on the screen that faces the user after flipping, or may be applied to a scenario in which the electronic device displays information through split-screen display. After the user triggers the electronic device to run a plurality of application programs, the electronic device may add application identifiers of these application programs to the target control, so that the user can conveniently and quickly add the application identifiers.

Optionally, in this embodiment of this application, after the electronic device runs the target application program, the electronic device may perform processing on an interface of the target application program, generate target information of the target application program, and store the target information.

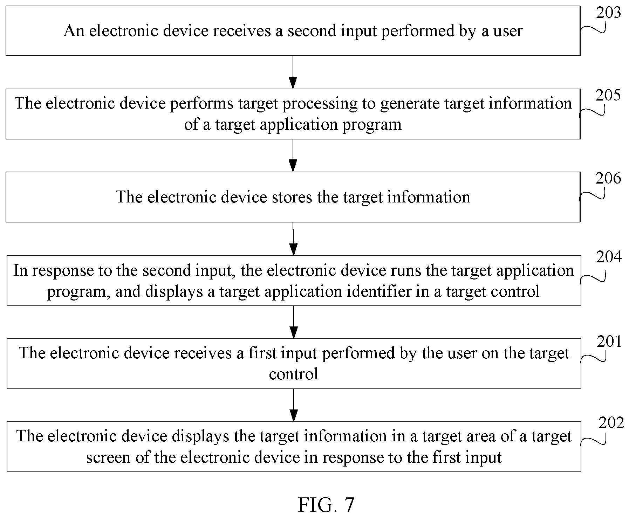

For example, with reference to FIG. 6, as shown in FIG. 7, after the foregoing step 203, the display control method provided in this embodiment of this application may further include the following step 205 and step 206.

It should be noted that in this embodiment of this application, the foregoing step 204 and step 205 and step 206 are input results of the electronic device in response to the second input. In actual implementation, the electronic device may first perform step 204, and then perform step 205 and step 206.

Step 205: The electronic device performs target processing to generate target information of the target application program.

In this embodiment of this application, after the electronic device receives the second input performed by the user, the electronic device may perform target processing on the interface of the target application program to generate the target information of the target application program.

It should be noted that in this embodiment of this application, the electronic device may perform target processing in a case that the electronic device switches the target application program from the foreground to the background.

Optionally, in this embodiment of this application, the foregoing target processing may include screenshot processing, screen recording processing, or the like. Specifically, this may be determined based on an actual use requirement, and is not limited in this embodiment of this application.

Optionally, in this embodiment of this application, the target information may include image information or video information. That is, the target information may include image information of the target interface of the target application program or video information of the target interface of the target application program.

Optionally, in this embodiment of this application, in a case that the target information includes an image of the target interface of the target application program, the foregoing step 205 may be specifically implemented by the following step 205a.

Step 205a: The electronic device captures interface content on the target interface of the target application program to generate a screenshot image.

Optionally, in this embodiment of this application, the electronic device may automatically capture the interface content on the target interface of the target application program, or the electronic device may capture the interface content on the target interface of the target application program after triggering by the user. Specifically, this may be determined based on an actual use requirement, and is not limited in this embodiment of this application.

Optionally, in this embodiment of this application, the screenshot image may be a still image, or may be a dynamic image. The dynamic image may be understood as follows: The electronic device captures a plurality of images, and displays the images periodically at a preset time interval.

Optionally, in this embodiment of this application, the target interface may be an interface displayed by the electronic device last time after the user triggers the electronic device to exit the target application program, or may be an interface of the target application program captured by the electronic device triggered by the user. Specifically, this may be determined based on an actual use requirement, and is not limited in this embodiment of this application.

Optionally, in this embodiment of this application, in a case that the target information includes a video of the target interface of the target application program, the foregoing step 205 may be specifically implemented by the following step 205b.

Step 205b: The electronic device performs screen recording on the target interface of the target application program to generate a target video with target duration.

Optionally, in this embodiment of this application, the electronic device may automatically perform screen recording on the target interface of the target application program, or the electronic device may perform screen recording on the target interface of the target application program after triggering by the user. Specifically, this may be determined based on an actual use requirement, and is not limited in this embodiment of this application.

Optionally, in this embodiment of this application, the target interface may be an interface displayed by the electronic device in a period that the electronic device runs the target application program until electronic device exits the target application program, or may be an interface displayed by the electronic device in a period that the electronic device runs the target application program for preset duration until the electronic device exits the target application program. Specifically, this may be determined based on an actual use requirement, and is not limited in this embodiment of this application.

Step 206: The electronic device stores the target information.

In this embodiment of this application, after the electronic device generates the target information of the target application program, the electronic device may store the target information, so that after the user performs the first input on the target control, the electronic device can display the target information in the target area of the target screen.

The display control method provided in this embodiment of this application may be applied to a scenario in which information is displayed on the screen that faces the user after flipping, or may be applied to a scenario in which the electronic device displays information through split-screen display. Because the electronic device displays an image captured by the electronic device from the target application program or a recorded video, instead of directly loading the interface of the target application program, time for loading the interface can be saved, and it is ensured that the electronic device displays the target information quickly.

Further, after the electronic device runs the target application program, the electronic device may automatically capture an image of content on the interface of the target application program without manually capturing information on the interface of the target application program by the user. Therefore, in a case that the user triggers the electronic device to display the target information, the electronic device may automatically display the information on the interface of the target application program.

Optionally, in this embodiment of this application, when the target application program is M application programs, after the electronic device displays the target information in the target area of the target screen of the electronic device, the user may further trigger the electronic device to update a display status of the target control through an input on the target control, and then the user may input an application identifier in the target control, and trigger the electronic device to update content displayed in a sub-display area to target information of an application program indicated by the application identifier.

For example, in a case that the target application program is M application programs, after the foregoing step 202, the display control method provided in this embodiment of this application may further include the following step 207 to step 2010.

Step 207: The electronic device receives a third input performed by the user on the target control.

An input form of the third input is different from an input form of the first input.

Optionally, in this embodiment of this application, the third input may be a tap input performed by the user on the target control, a touch-and-hold input performed by the user on the target control, a heavy touch input performed by the user on the target control, or the like. Specifically, this may be determined based on an actual use requirement, and is not limited in this embodiment of this application.

Step 208: The electronic device updates the target control from a first display state to a second display state in response to the third input.

In this embodiment of this application, after the electronic device receives the third input performed by the user, the electronic device may update the target control from the first display state to the second display state in response to the third input.

Optionally, in this embodiment of this application, the first display state may be a folded state, and the second display state may be an expanded state.

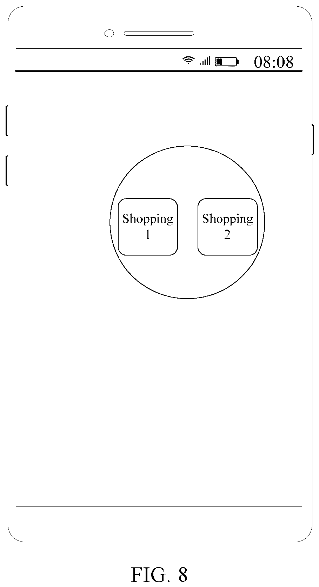

For example, with reference to FIG. 3, FIG. 3 is a schematic interface diagram of displaying the target control by the electronic device. The electronic device may display the target control in the first display state (for example, a folded state). After the electronic device receives the third input performed by the user, as shown in FIG. 8, the electronic device may update the target control from the first display state to the second display state (for example, an expanded state).

Step 209: The electronic device receives a fourth input performed by the user on a first application identifier in the target control.

The first application identifier may be any one of the N application identifiers except M application identifiers corresponding to the M application programs, and M<N.

Optionally, in this embodiment of this application, the fourth input may be an input performed by the user to drag the first application program identifier to the target area of the target screen of the electronic device, or may be a tap input simultaneously performed by the user on the first application identifier and the target area of the target screen of the electronic device. Specifically, this may be determined based on an actual use requirement, and is not limited in this embodiment of this application.

Step 2010: In response to the fourth input, the electronic device updates content in a target sub-display area in the M sub-display areas to target information of a first application program indicated by the first application identifier.

The target sub-display area may be a sub-display area at an input location of the fourth input.

It can be understood that, in a case that the input location of the fourth input in one of the M sub-display areas, the sub-display area may be considered as the target sub-display area.

In this embodiment of this application, after the electronic device receives the fourth input performed by the user on the first application identifier, the electronic device may update, in response to the fourth input, content in the sub-display area at the input location of the fourth input in the M sub-display areas to the target information of the first application program indicated by the first application identifier.

Optionally, in this embodiment of this application, in a case that the fourth input is an input performed by the user to drag the first application program identifier to the target area of the target screen of the electronic device, the input location of the fourth input may be a position where the drag ends; or a case that the fourth input is a tap input simultaneously performed by the user on the first application identifier and the target area of the target screen of the electronic device, the input location of the fourth input may be a location at which the user taps the target area of the target screen of the electronic device.

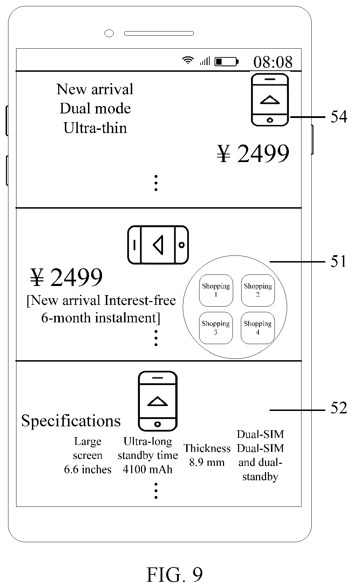

For example, with reference to FIG. 5, it is assumed that content in the sub-display area at the input location of the fourth input is content of the shopping application program 1 in FIG. 5, and the first application program is the shopping application program 4. After the electronic device receives the fourth input performed by the user, as shown in FIG. 9, the electronic device may update the content of the shopping application program 1 to target information 54 of the shopping application program 4.

The display control method provided in this embodiment of this application may be applied to a scenario in which information is displayed on the screen that faces the user after flipping, or may be applied to a scenario in which the electronic device displays information through split-screen display. Because an input performed by the user on one application identifier can trigger the electronic device to display, in the target area of the electronic device, target information of an application program indicated by the application identifier, user gesture sliding can be reduced, and an operation of quickly updating information is implemented.

Optionally, in this embodiment of this application, after the electronic device updates the target control from the first display state to the second display state, the user may further perform an input on an application identifier in the target control, to trigger the electronic device to locate a sub-display area indicated by the application identifier, that is, select the sub-display area indicated by the application identifier.

For example, after the foregoing step 208, the display control method provided in this embodiment of this application may further include the following step 2011 and step 2012.

Step 2011: The electronic device receives a fifth input performed by the user on a second application identifier.

The second application identifier may be any one of the M application identifiers.

Optionally, in this embodiment of this application, the fifth input may be a tap input performed by the user on any one of the M application identifiers, a touch-and-hold input performed by the user on any one of the M application identifiers, a heavy touch input performed by the user on any one of the M application identifiers, or the like. Specifically, this may be determined based on an actual use requirement, and is not limited in this embodiment of this application.

Step 2012: In response to the fifth input, the electronic device locates a sub-display area indicated by the second application identifier.

In this embodiment of this application, after the electronic device receives the fifth input performed by the user, in response to the fifth input, the electronic device may locate the sub-display-area indicated by the second application identifier, that is, select the sub-display area indicated by the second application identifier.

Optionally, in this embodiment of this application, the electronic device may display, to the user by highlighting display of the sub-display area indicated by the second application identifier, that the electronic device locates the sub-display area indicated by the second application identifier.

The display control method provided in this embodiment of this application may be applied to a scenario in which information is displayed on the screen that faces the user after flipping, or may be applied to a scenario in which the electronic device displays information through split-screen display. Because an input performed by the user on one application identifier can trigger the electronic device to quickly jump to target information of an application program indicated by the application identifier, for example, after the user performs an input on the application identifier of the shopping application program 1, the electronic device may automatically locate target information of the shopping application program 1, thereby reducing an operation of the user, implementing quick positioning, and improving user experience.

Optionally, in this embodiment of this application, after the electronic device updates the target control from the first display state to the second display state, the user may further trigger the electronic device to delete an application identifier and display content in a sub-display area indicated by the application identifier.

For example, after the foregoing step 208, the display control method provided in this embodiment of this application may further include the following step 2013 and step 2014.

Step 2013: The electronic device receives a sixth input performed by the user on a third application identifier.

The third application identifier may be any one of the M application identifiers.

Optionally, in this embodiment of this application, the sixth input may be a long-press input performed by the user on the third application identifier, a heavy touch input performed by the user on the third application identifier, or the like. Specifically, this may be determined based on an actual use requirement, and is not limited in this embodiment of this application.

It should be noted that, in this embodiment of this application, an input form of the sixth input is different from an input form of the fifth input.

Step 2014: In response to the sixth input, the electronic device cancels display of the third application identifier in the target control, and deletes display content in a sub-display area indicated by the third application identifier.

In this embodiment of this application, after the electronic device receives the sixth input performed by the user, in response to the sixth input, the electronic device may cancel display of the third application identifier in the target control, and delete the display content in the sub-display area indicated by the third application identifier.

For example, with reference to FIG. 8, FIG. 8 is a schematic interface diagram of displaying the target control by the electronic device in the second display state. It is assumed that the third application identifier is the shopping application identifier 1. After the user performs the sixth input on the shopping application identifier 1, as shown in (a) in FIG. 10, the electronic device may display a deletion identifier 10 in the shopping application identifier 1, and then the user may tap the deletion identifier 10, so that the electronic device can cancel display of the third application identifier in the target control, and delete the display content in the sub-display area indicated by the third application identifier.

Optionally, in this embodiment of this application, in a case that there is more than one application identifier in the target control, that is, M is greater than 1, the foregoing step 2014 may be specifically implemented by the following step 2014a.

Step 2014a: The electronic device cancels display of the third application identifier in the target control, and updates the display content in the sub-display area indicated by the third application identifier to target information of an application program indicated by a fourth application identifier.

A display priority of the application program indicated by the fourth application identifier is different from a display priority of an application program indicated by the third application identifier.

Optionally, in this embodiment of this application, the display priority of the application program indicated by the fourth application identifier may be higher than the display priority of the application program indicated by the third application identifier; or the display priority of the application program indicated by the fourth application identifier may be lower than the display priority of the application program indicated by the third application identifier. Specifically, this may be determined based on an actual use requirement, and is not limited in this embodiment of this application.

The display control method provided in this embodiment of this application may be applied to a scenario in which information is displayed on the screen that faces the user after flipping, or may be applied to a scenario in which the electronic device displays information through split-screen display. Because an input performed by the user on an application identifier in the target control can trigger the electronic device to cancel display of the application identifier, the user does not need to trigger the electronic device to switch to a setting application program, so that the user can conveniently and quickly delete an unwanted application identifier.

Further, when the electronic device cancels display of an application identifier, display content in a sub-display area indicated by the application identifier displayed by the electronic device may be automatically deleted. Therefore, the display content can be prevented from occupying display resources of the electronic device, and the user can be prevented from manually deleting the content.

Optionally, in this embodiment of this application, after the electronic device displays the target information in the target area of the target screen of the electronic device, the user may further perform on input on target information on a target interface of an application program, to trigger the electronic device to display a program interface of the application program.

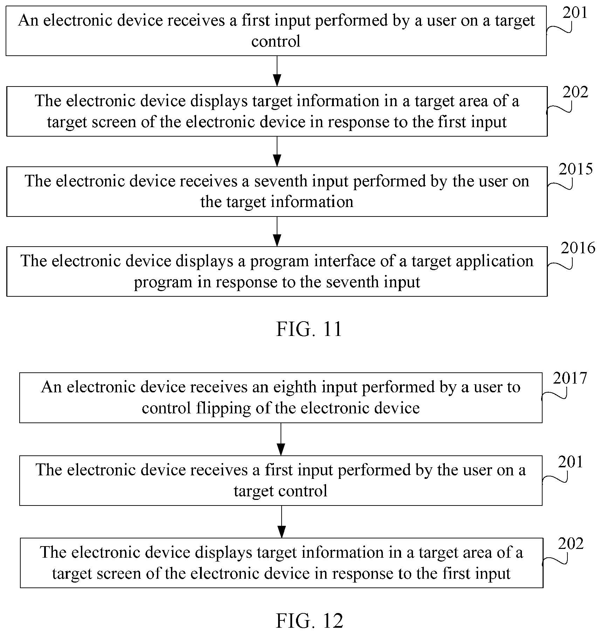

For example, with reference to FIG. 4, as shown in FIG. 11, after the foregoing step 202, the display control method provided in this embodiment of this application may further include the following step 2015 and step 2016.

Step 2015: The electronic device receives a seventh input performed by the user on the target information.

Optionally, in this embodiment of this application, the seventh input may be a tap input performed by the user on the target information, a long-press input performed by the user on the target information, a heavy touch input performed by the user on the target information, or the like. Specifically, this may be determined based on an actual use requirement, and is not limited in this embodiment of this application.

Step 2016: The electronic device displays a program interface of the target application program in response to the seventh input.

In this embodiment of this application, after the electronic device receives the seventh input performed by the user, the electronic device may display the program interface of the target application program in response to the seventh input.

Optionally, in this embodiment of this application, after responding to the seventh input, the electronic device may jump to a main interface of the target application program or jump to a target information interface of the target application program. Specifically, this may be determined based on an actual use requirement, and is not limited in this embodiment of this application.

The display control method provided in this embodiment of this application may be applied to a scenario in which information is displayed on the screen that faces the user after flipping, or may be applied to a scenario in which the electronic device displays information through split-screen display. In a case that the electronic device displays the target information of the target application program, because an input performed by the user on the target information of the target application program can trigger the electronic device to directly jump to the program interface of the target application program, the program interface of the target application program can be quickly switched, so that the user directly operates (for example, purchases a commodity) on the target interface of the target application program, thereby improving human-computer interaction performance.

Optionally, in this embodiment of this application, before the electronic device receives the first input performed by the user on the target control, the user may further first control flipping of the electronic device to flip the display screen of the electronic device to the target screen, so that after the user performs the first input on the target control, the electronic device can display the target information in the target area of the target screen.

For example, with reference to FIG. 4, as shown in FIG. 12, before the foregoing step 201, the display control method provided in this embodiment of this application may further include the following step 2017.

Step 2017: The electronic device receives an eighth input performed by the user to control flipping of the electronic device.

In this embodiment of this application, the target screen of the electronic device may be a screen that faces the user after the electronic device is flipped.

In this embodiment of this application, the electronic device may determine, by using the following method, to receive a flip input performed by the user on the electronic device: When a space gesture capture apparatus of the electronic device receives the flip input performed by the user on the electronic device, that is, receives an operation of the user to control flipping of the electronic device by applying an external force to the electronic device. Based on the flip input performed by the user, when the space gesture capture apparatus captures that a deflection angular velocity of the electronic device on at least one of an X-axis, a Y-axis, and an Z-axis in a three-dimensional Cartesian coordinate system meets a preset condition (for example, a deflection angular velocity change is greater than or equal to a preset angular velocity change threshold), it may be determined that the electronic device receives the flip input performed by the user on the electronic device.

The display control method provided in this embodiment of this application may be applied to a scenario in which information is displayed on the screen that faces the user after flipping. Because after the user controls the electronic device to flip, the electronic device may automatically display information about the target application program on the screen that faces the user after flipping, the user can view the information about the target application program without a need to switch back and forth the screen, thereby simplifying an operation of viewing the target information by the user, and improving efficiency of viewing the target information by the user.

Optionally, in this embodiment of this application, in a case that the electronic device displays the target control, the user may further control, through one input (for example, the following ninth input), the electronic device to quickly disable the preset mode (that is, not disabling in a preset entry in the setting application program), that is, cancel display of the target control.

For example, after the foregoing step 202, the display control method provided in this embodiment of this application may further include the following step 2018 and step 2019.

Step 2018: The electronic device receives a ninth input performed by the user on the target control.

Optionally, in this embodiment of this application, the ninth input may be a long-press input performed by the user on the target control, a slide input performed by the user on the target control, or the like. Specifically, this may be determined based on an actual use requirement, and is not limited in this embodiment of this application.

Step 2019: The electronic device cancels display of the target control in response to the ninth input.

In this embodiment of this application, after the electronic device receives the ninth input performed by the user, the electronic device may cancel display of the target control in response to the ninth input.

In this embodiment of this application, the user performs an input on the target control on a desktop, to trigger the electronic device to disable the preset mode, and the user does not need to tap a preset control in a setting application program to trigger the electronic device to disable the preset mode, so that the preset mode can be quickly disabled.

It should be noted that all inputs (for example, the first input, the second input, the third input, the fourth input, or the fifth input) of the user in this embodiment of this application may be specifically a direct touch by a finger of the user, or a touch by a hand of the user by holding an operating body such as a stylus. Specifically, this may be determined based on an actual use requirement, and is not limited in this embodiment of this application.

It should be noted that, in the embodiments of this application, the display control method shown in the foregoing accompanying drawings of the method is illustrated with reference to one of the accompanying drawings in the embodiments of this application. In specific implementation, the display control method shown in the foregoing accompanying drawings of the method may be further implemented with reference to any other accompanying drawings that may be combined shown in the foregoing embodiments. Details are not described herein again.

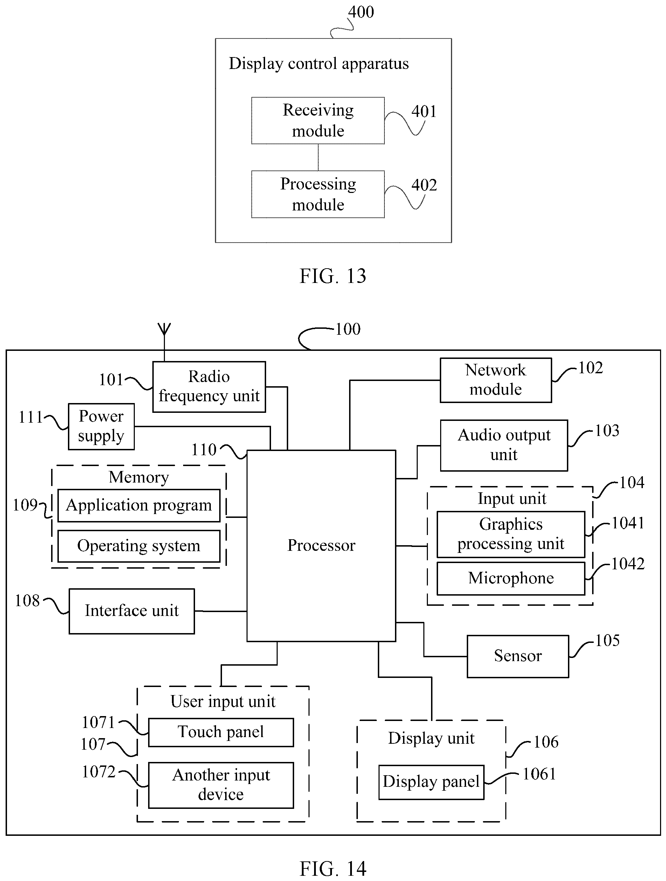

As shown in FIG. 13, an embodiment of this application provides a display control apparatus 400. The display control apparatus 400 includes a receiving module 401 and a processing module 402. The receiving module 401 may be configured to receive a first input performed by a user on a target control, where the target control includes N application identifiers; and the processing module 402 may be configured to display target information in a target area of a target screen of an electronic device in response to the first input received by the receiving module 401, where the target information is pre-stored information about a target interface of a target application program, the target application program is an application program indicated by a target application identifier in the N application identifiers, and N is a positive integer.

Optionally, in this embodiment of this application, the receiving module 401 may be further configured to: before receiving the first input performed by the user on the target control, receive a second input performed by the user; and the processing module 402 may be further configured to: in response to the second input received by the receiving module 401, run the target application program, and display the target application identifier in the target control.

Optionally, in this embodiment of this application, the processing module 402 may be further configured to: after the receiving module 401 receives the second input performed by the user, perform target processing to generate target information of the target application program, and store the target information, where the target information includes an image or a video.

Optionally, in this embodiment of this application, in a case that the target information includes an image, the processing module 402 may be specifically configured to capture interface content on the target interface of the target application program to generate a screenshot image.

Optionally, in this embodiment of this application, in a case that the target information includes a video, the processing module 402 may be specifically configured to perform screen recording on the target interface of the target application program to generate a target video with target duration.

Optionally, in this embodiment of this application, the processing module 402 may be specifically configured to: in a case that there is one target application program, display the target information in a display area in a preset range of the target screen of the electronic device.

Optionally, in this embodiment of this application, the processing module 402 may be specifically configured to: in a case that there are M target application programs, display target information of the M application programs in M sub-display areas of the target screen according to display priorities of the M application programs, where target information of one application program is correspondingly displayed in one sub-display area, M is an integer greater than 1, and M≤N.

Optionally, in this embodiment of this application, the receiving module 401 may be further configured to: after the processing module 402 displays the target information in the target area of the target screen of the electronic device, receive a third input performed by the user on the target control; the processing module 402 may be further configured to update the target control from a first display state to a second display state in response to the third input received by the receiving module 401; the receiving module 401 may be further configured to receive a fourth input performed by the user on a first application identifier in the target control; and the processing module 402 may be further configured to: in response to the fourth input received by the receiving module 401, update content in a target sub-display area in the M sub-display areas to target information of a first application program indicated by the first application identifier, where M<N, the target sub-display area is a sub-display area in which an input location of the fourth input is located, and the first application identifier is any one of the N application identifiers except M application identifiers corresponding to the M application programs.

Optionally, in this embodiment of this application, the receiving module 401 may be further configured to: after the processing module 402 updates the target control from the first display state to the second display state, receive a fifth input performed by the user on a second application identifier; and the processing module 402 may be further configured to: in response to the fifth input, locate a sub-display area indicated by the second application identifier, where the second application identifier is any one of the M application identifiers.

Optionally, in this embodiment of this application, the receiving module 401 may be further configured to: after the processing module 402 displays the target information in the target area of the target screen of the electronic device, receive a sixth input performed by the user on a third application identifier; and the processing module 402 may be further configured to: in response to the sixth input received by the receiving module 401, cancel display of the third application identifier in the target control, and delete display content in a sub-display area indicated by the third application identifier, where the third application identifier is any one of the M application identifiers.

Optionally, in this embodiment of this application, the processing module 402 may be specifically configured to: in a case that a quantity of application identifiers in the target control is greater than 1, cancel display of the third application identifier in the target control, and update the display content in the sub-display area indicated by the third application identifier to target information of an application program indicated by a fourth application identifier, where a display priority of the application program indicated by the fourth application identifier is different from a display priority of an application program indicated by the third application identifier.

Optionally, in this embodiment of this application, the receiving module 401 may be further configured to: after the processing module 402 displays the target information in the target area of the target screen of the electronic device, receive a seventh input performed by the user on the target information; and the processing module 402 may be further configured to display a program interface of the target application program in response to the seventh input received by the receiving module 401.

Optionally, in this embodiment of this application, the receiving module 401 may be further configured to: before receiving the first input performed by the user on the target control, receive an eighth input performed by the user to control flipping of the electronic device, where the target screen is a display screen that faces the user after the electronic device is flipped.

The display control apparatus 400 provided in this embodiment of this application can implement the processes implemented by the electronic device in the foregoing method embodiment. To avoid repetition, details are not described herein again.

This embodiment of this application provides a display control apparatus. After the display control apparatus receives a first input performed by a user on a target control (including N application identifiers), the display control apparatus may display target information in a target area of a target screen of the electronic device in response to the first input. The target information is pre-stored information about a target interface of a target application program, the target application program is an application program indicated by a target application identifier in the N application identifiers, and N is a positive integer. In this solution, the display control apparatus may prestore the information about the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the display control apparatus can be triggered to display the related information in these application programs stored in the target area of the target screen of the electronic device. In this way, the user can continue to browse other content on the interface of the one application program, and can directly compare information about the content in these application programs, that is, the user does not need to exit the one application program to view the information about the content in these application programs, thereby ensuring that the user can browse an interface of one application program and compare related information about specific content in different applications on the interface at the same time.

Further, because the user can directly compare the information about the content in the different application programs without triggering the display control apparatus to switch between the different application programs for a plurality of times, the process of comparing the related information about the content in the different application programs can be simplified, thereby improving efficiency of comparing the related information.

FIG. 14 is a schematic diagram of hardware of an electronic device according to the embodiments of this application. As shown in FIG. 14, an electronic device 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that a structure of the electronic device shown in FIG. 14 constitutes no limitation on the electronic device, and the electronic device may include more or fewer components than those shown in the figure, or have a combination of some components, or have a different component arrangement. In this embodiment of this application, the electronic device includes but is not limited to a mobile phone, a tablet computer, a notebook computer, a palmtop computer, an in-vehicle terminal, a wearable device, a pedometer, and the like.

The user input unit 107 may be configured to receive a first input performed by a user on a target control, where the target control includes N application identifiers; and the display unit 106 may be configured to display target information in a target area of a target screen of an electronic device in response to the first input received by the user input unit 107, where the target information is pre-stored information about a target interface of a target application program, the target application program is an application program indicated by a target application identifier in the N application identifiers, and N is a positive integer.

This embodiment of this application provides an electronic device. After the electronic device receives a first input performed by a user on a target control (including N application identifiers), the electronic device may display target information in a target area of a target screen of the electronic device in response to the first input. The target information is pre-stored information about a target interface of a target application program, the target application program is an application program indicated by a target application identifier in the N application identifiers, and N is a positive integer. In this solution, the electronic device may prestore the information about the target interface of the target application program. Therefore, when the target control includes N application identifiers, and the N application identifiers include the target application identifier, if the user needs to browse an interface of one application program and compare related information about specific content in different application programs on the interface at the same time, the user may perform the first input on the target control, so that the electronic device can be triggered to display the related information in these application programs stored in the target area of the target screen. In this way, the user can continue to browse other content on the interface of the one application program, and can directly compare information about the content in these application programs, that is, the user does not need to exit the one application program to view the information about the content in these application programs, thereby ensuring that the user can browse an interface of one application program and compare related information about specific content in different applications on the interface at the same time.

Further, because the user can directly compare the information about the content in the different application programs without triggering the electronic device to switch between the different application programs for a plurality of times, the process of comparing the related information about the content in the different application programs can be simplified, thereby improving efficiency of comparing the related information.

Optionally, in this embodiment of this application, the user input unit 107 may be further configured to: before receiving the first input performed by the user on the target control, receive a second input performed by the user; and the processor 110 may be further configured to: in response to the second input received by the user input unit 107, run the target application program, and display the target application identifier in the target control.

Optionally, in this embodiment of this application, the processor 110 may be further configured to: after the user input unit 107 receives the second input performed by the user, perform target processing to generate target information of the target application program, and store the target information, where the target information includes an image or a video.

Optionally, in this embodiment of this application, in a case that the target information includes an image, the processor 110 may be specifically configured to capture interface content on the target interface of the target application program to generate a screenshot image.

Optionally, in this embodiment of this application, in a case that the target information includes a video, the processor 110 may be specifically configured to perform screen recording on the target interface of the target application program to generate a target video with target duration.

Optionally, in this embodiment of this application, the processor 110 may be specifically configured to: in a case that there is one target application program, display the target information in a display area in a preset range of the target screen of the electronic device.

Optionally, in this embodiment of this application, the processor 110 may be specifically configured to: in a case that there are M target application programs, display target information of the M application programs in M sub-display areas of the target screen according to display priorities of the M application programs, where target information of one application program is correspondingly displayed in one sub-display area, M is an integer greater than 1, and M≤N.

Optionally, in this embodiment of this application, the user input unit 107 may be further configured to: after the display unit 106 displays the target information in the target area of the target screen of the electronic device, receive a third input performed by the user on the target control; the display unit 106 may be further configured to update the target control from a first display state to a second display state in response to the third input received by the user input unit 107; the user input unit 107 may be further configured to receive a fourth input performed by the user on a first application identifier in the target control; and the display unit 106 may be further configured to: in response to the fourth input received by the user input unit 107, update content in a target sub-display area in the M sub-display areas to target information of a first application program indicated by the first application identifier, where M<N, the target sub-display area is a sub-display area in which an input location of the fourth input is located, and the first application identifier is any one of the N application identifiers except M application identifiers corresponding to the M application programs.

Optionally, in this embodiment of this application, the user input unit 107 may be further configured to: after the display unit 106 updates the target control from the first display state to the second display state, receive a fifth input performed by the user on a second application identifier; and the display unit 106 may be further configured to: in response to the fifth input, locate a sub-display area indicated by the second application identifier, where the second application identifier is any one of the M application identifiers.

Optionally, in this embodiment of this application, the user input unit 107 may be further configured to: after the display unit 106 displays the target information in the target area of the target screen of the electronic device, receive a sixth input performed by the user on a third application identifier; and the display unit 106 may be further configured to: in response to the sixth input received by the user input unit 107, cancel display of the third application identifier in the target control, and delete display content in a sub-display area indicated by the third application identifier, where the third application identifier is any one of the M application identifiers.

Optionally, in this embodiment of this application, the display unit 106 may be specifically configured to: in a case that a quantity of application identifiers in the target control is greater than 1, cancel display of the third application identifier in the target control, and update the display content in the sub-display area indicated by the third application identifier to target information of an application program indicated by a fourth application identifier, where a display priority of the application program indicated by the fourth application identifier is different from a display priority of an application program indicated by the third application identifier.

Optionally, in this embodiment of this application, the user input unit 107 may be further configured to: after the display unit 106 displays the target information in the target area of the target screen of the electronic device, receive a seventh input performed by the user on the target information; and the display unit 106 may be further configured to display a program interface of the target application program in response to the seventh input received by the user input unit 107.

Optionally, in this embodiment of this application, the user input unit 107 may be further configured to: before receiving the first input performed by the user on the target control, receive an eighth input performed by the user to control flipping of the electronic device, where the target screen is a display screen that faces the user after the electronic device is flipped.

It can be understood that, in this embodiment of this application, the receiving module 401 in the schematic structural diagram of the electronic device (for example, FIG. 13) may be implemented by the user input unit 107, and the display module 402 in the schematic structural diagram of the electronic device (for example, FIG. 13) may be implemented by the display unit 106 and the processor 110.

It should be understood that, in this embodiment of this application, the radio frequency unit 101 may be configured to receive and send information or a signal in a call process. Specifically, after receiving downlink data from a base station, the radio frequency unit 101 sends the downlink data to the processor 110 for processing. In addition, the radio frequency unit 101 sends uplink data to the base station. Usually, the radio frequency unit 101 includes but is not limited to an antenna, at least one amplifier, a transceiver, a coupler, a low noise amplifier, a duplexer, and the like. In addition, the radio frequency unit 101 may communicate with a network and another device through a wireless communication system.

The electronic device provides wireless broadband Internet access for the user by using the network module 102, for example, helping the user to send and receive an e-mail, brows a web page, and access streaming media.

The audio output unit 103 may convert audio data received by the radio frequency unit 101 or the network module 102 or stored in the memory 109 into an audio signal and output the audio signal as a sound. In addition, the audio output unit 103 may further provide an audio output (for example, a call signal received voice, or a message received voice) related to a specific function implemented by the electronic device 100. The audio output unit 103 includes a speaker, a buzzer, a telephone receiver, and the like.

The input unit 104 is configured to receive an audio signal or a video signal. The input unit 104 may include a graphics processing unit (graphics processing unit, GPU) 1041 and a microphone 1042, and the graphics processing unit 1041 processes image data of a still picture or video obtained by an image capture apparatus (such as a camera) in a video capture mode or an image capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 may receive a sound and can process such sound into audio data. Processed audio data may be converted, in a call mode, into a format that can be sent to a mobile communication base station by using the radio frequency unit 101 for output.

The electronic device 100 further includes at least one sensor 105 such as a light sensor, a motion sensor, and another sensor. Specifically, the light sensor includes an ambient light sensor and a proximity sensor. The ambient light sensor may adjust luminance of the display panel 1061 based on brightness of ambient light. The proximity sensor may turn off the display panel 1061 and/or backlight when the electronic device 100 moves to an ear. As a type of the motion sensor, an accelerometer sensor may detect an acceleration value in each direction (generally, three axes), and detect a value and a direction of gravity when the accelerometer sensor is static, and may be used for recognizing a posture of the electronic device (such as screen switching between landscape and portrait modes, a related game, or magnetometer posture calibration), a function related to vibration recognition (such as a pedometer or a knock), and the like. The sensor 105 may further include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information entered by a user or information provided for a user. The display unit 106 may include a display panel 1061. The display panel 1061 may be configured in a form of a liquid crystal display (liquid crystal display, LCD), an organic light-emitting diode (organic light-emitting diode, OLED), or the like.

The user input unit 107 may be configured to: receive entered digital or character information, and generate key signal input related to a user setting and function control of the electronic device. Specifically, the user input unit 107 includes a touch panel 1071 and another input device 1072.The touch panel 1071 is also referred to as a touchscreen, and may collect a touch operation performed by a user on or near the touch panel 1071 (such as an operation performed by a user on the touch panel 1071 or near the touch panel 1071 by using any proper object or accessory, such as a finger or a stylus). The touch panel 1071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 110, and can receive and execute a command sent by the processor 110. In addition, the touch panel 1071 may be of a resistive type, a capacitive type, an infrared type, a surface acoustic wave type, or the like. The user input unit 107 may include another input device 1072 in addition to the touch panel 1071. Specifically, the another input device 1072 may include but is not limited to a physical keyboard, a functional button (such as a volume control button or a power on/off button), a trackball, a mouse, and a joystick. Details are not described herein.

Further, the touch panel 1071 may cover the display panel 1061. When detecting the touch operation on or near the touch panel 1071, the touch panel 1071 transmits the touch operation to the processor 110 to determine a type of a touch event, and then the processor 110 provides corresponding visual output on the display panel 1061 based on the type of the touch event. In FIG. 14, although the touch panel 1071 and the display panel 1061 are used as two independent parts to implement input and output functions of the electronic device, in some embodiments, the touch panel 1071 and the display panel 1061 may be integrated to implement the input and output functions of the electronic device. This is not specifically limited herein.

The interface unit 108 is an interface for connecting an external apparatus with the electronic device 100. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, a headset port, and the like. The interface unit 108 may be configured to receive input (for example, data information and power) from an external apparatus and transmit the received input to one or more elements in the electronic device 100 or may be configured to transmit data between the electronic device 100 and an external apparatus.

The memory 109 may be configured to store a software program and various data. The memory 109 may mainly include a program storage area and a data storage area. The program storage area may store an operating system, an application program required by at least one function (such as a sound play function or an image play function), and the like. The data storage area may store data (such as audio data or an address book) created based on use of the mobile phone, and the like. In addition, the memory 109 may include a high-speed random access memory, and may further include a nonvolatile memory, for example, at least one magnetic disk storage device, a flash storage device, or another volatile solid-state storage device.

The processor 110 is a control center of the electronic device, connects all parts of the entire electronic device by using various interfaces and lines, and performs various functions of the electronic device and data processing by running or executing a software program and/or a module that are/is stored in the memory 109 and by invoking data stored in the memory 109, to overall monitor the electronic device. The processor 110 may include one or more processing units. Optionally, an application processor and a modem processor may be integrated into the processor 110. The application processor mainly processes an operating system, a user interface, an application program, and the like. The modem processor mainly processes wireless communications. It can be understood that, alternatively, the modem processor may not be integrated into the processor 110.

The electronic device 100 may further include the power supply 111 (such as a battery) that supplies power to each component. Optionally, the power supply 111 may be logically connected to the processor 110 by using a power supply management system, so as to implement functions such as charging and discharging management, and power consumption management by using the power supply management system.

In addition, the electronic device 100 includes some function modules not shown, and details are not described herein.

Optionally, an embodiment of this application further provides a display control apparatus, including a processor, a memory, and a computer program that is stored in the memory and that can run on the processor. When the computer program is executed by the processor, the processes of the foregoing method embodiment are implemented and a same technical effect can be achieved. To avoid repetition, details are not described herein again.

Optionally, an embodiment of this application further provides a computer-readable storage medium. The computer-readable storage medium stores a computer program, and when the computer program is executed by a processor, the processes of the foregoing method embodiment are implemented and a same technical effect can be achieved. To avoid repetition, details are not described herein again. The computer-readable storage medium may include a read-only memory (read-only memory, ROM), a random access memory (random access memory, RAM), a magnetic disk, an optical disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing an electronic device (which may be a mobile phone, a computer, a server, an air conditioner, a network device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A display control method, wherein the method comprises:
receiving a first input performed by a user on a target control, wherein the target control comprises N application identifiers; and
displaying target information in a target area of a target screen of an electronic device in response to the first input, wherein
the target information is pre-stored information about a target interface of a target application program, the target application program is an application program indicated by a target application identifier in the N application identifiers, and N is a positive integer.

2. The method according to claim 1, wherein before the receiving a first input performed by a user on a target control, the method further comprises:
receiving a second input performed by the user; and
in response to the second input, running the target application program, and displaying the target application identifier in the target control.

3. The method according to claim 2, wherein after the receiving a second input performed by the user, the method further comprises:
performing target processing to generate target information of the target application program, and storing the target information, wherein the target information comprises an image or a video.

4. The method according to claim 3, wherein the target information comprises an image; and
the performing target processing to generate target information of the target application program comprises:
capturing interface content on the target interface of the target application program to generate a screenshot image.

5. The method according to claim 3, wherein the target information comprises a video; and
the performing target processing to generate target information of the target application program comprises:
performing screen recording on the target interface of the target application program to generate a target video with target duration.

6. The method according to claim 1, wherein the displaying target information in a target area of a target screen of an electronic device comprises:
in a case that there is one target application program, displaying the target information in a display area in a preset range of the target screen of the electronic device.

7. The method according to claim 1, wherein the displaying target information in a target area of a target screen of an electronic device comprises:
in a case that there are M target application programs, displaying target information of the M application programs in M sub-display areas of the target screen according to display priorities of the M application programs, wherein
target information of one application program is correspondingly displayed in one sub-display area, M is an integer greater than 1, and M≤N.

8. The method according to claim 7, wherein after the displaying target information in a target area of a target screen of an electronic device, the method further comprises:
receiving a third input performed by the user on the target control;
updating the target control from a first display state to a second display state in response to the third input;
receiving a fourth input performed by the user on a first application identifier in the target control; and
in response to the fourth input, updating content in a target sub-display area in the M sub-display areas to target information of a first application program indicated by the first application identifier, wherein
M<N, the target sub-display area is a sub-display area in which an input location of the fourth input is located, and the first application identifier is any one of the N application identifiers except M application identifiers corresponding to the M application programs.

9. The method according to claim 8, wherein after the updating the target control from a first display state to a second display state, the method further comprises:
receiving a fifth input performed by the user on a second application identifier; and
in response to the fifth input, locating a sub-display area indicated by the second application identifier, wherein
the second application identifier is any one of the M application identifiers.

10. The method according to claim 8, wherein after the updating the target control from a first display state to a second display state, the method further comprises:
receiving a sixth input performed by the user on a third application identifier; and
in response to the sixth input, cancelling display of the third application identifier in the target control, and deleting display content in a sub-display area indicated by the third application identifier, wherein
the third application identifier is any one of the M application identifiers.

11. The method according to claim 10, wherein the cancelling display of the third application identifier in the target control, and deleting display content in a sub-display area indicated by the third application identifier comprises:
in a case that a quantity of application identifiers in the target control is greater than 1, cancelling display of the third application identifier in the target control, and updating the display content in the sub-display area indicated by the third application identifier to target information of an application program indicated by a fourth application identifier, wherein
a display priority of the application program indicated by the fourth application identifier is different from a display priority of an application program indicated by the third application identifier.

12. The method according to claim 1, wherein after the displaying target information in a target area of a target screen of an electronic device, the method further comprises:
receiving a seventh input performed by the user on the target information; and
displaying a program interface of the target application program in response to the seventh input.

13. The method according to claim 1, wherein before the receiving a first input performed by a user on a target control, the method further comprises:
receiving an eighth input performed by the user to control flipping of the electronic device, wherein
the target screen is a display screen that faces the user after the electronic device is flipped.

14. A display control apparatus, wherein the display control apparatus comprises a receiving module and a processing module, wherein
the receiving module is configured to receive a first input performed by a user on a target control, wherein the target control comprises N application identifiers; and
the processing module is configured to display target information in a target area of a target screen of an electronic device in response to the first input received by the receiving module, wherein
the target information is pre-stored information about a target interface of a target application program, the target application program is an application program indicated by a target application identifier in the N application identifiers, and N is a positive integer.

15. The display control apparatus according to claim 14, wherein
the receiving module is further configured to: before receiving the first input performed by the user on the target control, receive a second input performed by the user; and
the processing module is further configured to: in response to the second input received by the receiving module, run the target application program, and display the target application identifier in the target control.

16. The display control apparatus according to claim 15, wherein
the processing module is further configured to: after the receiving module receives the second input performed by the user, perform target processing to generate target information of the target application program, and store the target information, wherein the target information comprises an image or a video.

17. The display control apparatus according to claim 16, wherein the target information comprises an image; and
the processing module is specifically configured to capture interface content on the target interface of the target application program to generate a screenshot image.

18. The display control apparatus according to claim 16, wherein the target information comprises a video; and
the processing module is specifically configured to perform screen recording on the target interface of the target application program to generate a target video with target duration.

19. The display control apparatus according to claim 14, wherein
the processing module is specifically configured to: in a case that there is one target application program, display the target information in a display area in a preset range of the target screen of the electronic device.

20. The display control apparatus according to claim 14, wherein
the processing module is specifically configured to: in a case that there are M target application programs, display target information of the M application programs in M sub-display areas of the target screen according to display priorities of the M application programs, wherein
target information of one application program is correspondingly displayed in one sub-display area, M is an integer greater than 1, and M≤N.

21. The display control apparatus according to claim 20, wherein
the receiving module is further configured to: after the processing module displays the target information in the target area of the target screen of the electronic device, receive a third input performed by the user on the target control;
the processing module is further configured to update the target control from a first display state to a second display state in response to the third input received by the receiving module;
the receiving module is further configured to receive a fourth input performed by the user on a first application identifier in the target control; and
the processing module is further configured to: in response to the fourth input received by the receiving module, update content in a target sub-display area in the M sub-display areas to target information of a first application program indicated by the first application identifier, wherein
M<N, the target sub-display area is a sub-display area in which an input location of the fourth input is located, and the first application identifier is any one of the N application identifiers except M application identifiers corresponding to the M application programs.

22. The display control apparatus according to claim 21, wherein
the receiving module is further configured to: after the processing module updates the target control from the first display state to the second display state, receive a fifth input performed by the user on a second application identifier; and
the processing module is further configured to: in response to the fifth input, locate a sub-display area indicated by the second application identifier, wherein
the second application identifier is any one of the M application identifiers.

23. The display control apparatus according to claim 21, wherein
the receiving module is further configured to: after the processing module displays the target information in the target area of the target screen of the electronic device, receive a sixth input performed by the user on a third application identifier; and
the processing module is further configured to: in response to the sixth input received by the receiving module, cancel display of the third application identifier in the target control, and delete display content in a sub-display area indicated by the third application identifier, wherein
the third application identifier is any one of the M application identifiers.

24. The display control apparatus according to claim 23, wherein
the processing module is specifically configured to: in a case that a quantity of application identifiers in the target control is greater than 1, cancel display of the third application identifier in the target control, and update the display content in the sub-display area indicated by the third application identifier to target information of an application program indicated by a fourth application identifier, wherein
a display priority of the application program indicated by the fourth application identifier is different from a display priority of an application program indicated by the third application identifier.

25. The display control apparatus according to claim 14, wherein
the receiving module is further configured to: after the processing module displays the target information in the target area of the target screen of the electronic device, receive a seventh input performed by the user on the target information; and
the processing module is further configured to display a program interface of the target application program in response to the seventh input received by the receiving module.

26. The display control apparatus according to claim 14, wherein
the receiving module is further configured to: before receiving the first input performed by the user on the target control, receive an eighth input performed by the user to control flipping of the electronic device, wherein
the target screen is a display screen that faces the user after the electronic device is flipped.

27. A computer program product, wherein the program product is executed by at least one processor to implement the display control method according to any one of claims 1 to 13.

28. A display apparatus, wherein the apparatus is configured to perform the display control method according to any one of claims 1 to 13.
